# EUROPEAN PATENT APPLICATION

(11) **EP 4 512 970 A2**
(43) Date of publication of application: **26.02.2025**
(21) Application number: 24196020.2
(22) Date of filing: 22.08.2024
(51) Int. Cl.: E03D 11/17

(54) **FLUSHING PIPE AND TOILET FLUSHING SYSTEM**

(30) Priority: 22.08.2023 CN 202322263069 U
(71) Applicant: Kohler (China) Investment Co. Ltd., Shibei Industrial Park, Jing'an District Shanghai Shanghai 200436 (CN)
(72) Inventor: HUANG, Congxian, Shanghai, 200436 (CN); ZANG, Yunqing, Shanghai, 200436 (CN); ZHAO, Songyuan, Shanghai, 200436 (CN)
(74) Representative: Barker Brettell LLP

(57) **Abstract**

A flushing device configured to connect a toilet to a water tank includes a flushing vertical pipe configured to be connected to the water tank; a flushing lateral pipe configured to be connected to the toilet; and a connecting bend pipe configured to be connected between a lower end of the flushing vertical pipe and a first end of the flushing lateral pipe. An inner diameter of the flushing vertical pipe is larger than an inner diameter of the connecting bend pipe and larger than an inner diameter of the flushing lateral pipe.

## Description

### CROSS REFERENCE TO RELATED APPLICATION

This application claims the benefit of priority to: Chinese Patent Application No. 202322263069.0 filed in the Chinese Intellectual Property Office on August 22, 2023, which is hereby incorporated by reference in its entirety.

### FIELD

The present disclosure relates to the technical field of toilets and particularly relates to a flushing device and a toilet flushing system.

### BACKGROUND

A toilet and a water tank form a toilet flushing system. Some water tanks are hung on the wall or embedded in the wall, and the water tank and the water inlet of the toilet are connected by a flushing pipe. The flushing pipes in prior art usually adopt an L-shaped bend pipe structure, which comprises a vertical section and a horizontal section. An upper end of the vertical section is connected to the water tank. One end of the horizontal section is connected to a lower end of the vertical section, and the other end of the horizontal section is connected to the water inlet of the toilet. The pipe diameters of the vertical section and horizontal section are close, with a deviation of less than 10 mm, and the pipe diameters are generally less than 50 mm. Water drained from the water tank may contain bubbles, and the vertical section does not have extra space to accommodate these bubbles. The bubbles are easily trapped at the right-angle bend and also flow into the lateral section with the water. This affects the drainage flow rate and thus affects the flushing effect of the toilet.

### SUMMARY

The present disclosure aims to overcome the defects in the prior art and provides a flushing device and a toilet flushing system. The flushing device comprises a flushing vertical pipe, a connecting bend pipe, and a flushing lateral pipe connected in sequence. An inner diameter of the flushing vertical pipe is larger than an inner diameter of the connecting bend pipe and larger than an inner diameter of the flushing lateral pipe. During flushing, the flushing vertical pipe will not be filled with water, and the bubbles entrained in the water discharged from the water tank will be accumulated in a cavity of the flushing vertical pipe. This may effectively avoid or reduce the bubbles that rush down with the water flow and are accumulated in the bend of the connecting bend pipe and the flushing lateral pipe. This may reduce the influence of bubbles on the flushing speed and improve the flushing performance of the flushing device and the toilet flushing system. This may improve the flushing effect of the toilet.

A technical solution of the present disclosure provides a flushing device for connecting a toilet to a water tank. The flushing device includes a flushing vertical pipe configured to be connected to the water tank. The flushing device also includes a flushing lateral pipe configured to be connected to the toilet. The flushing device includes a connecting bend pipe connected between a lower end of the flushing vertical pipe and one end of the flushing lateral pipe.

An inner diameter of the flushing vertical pipe is larger than an inner diameter of the connecting bend pipe and larger than an inner diameter of the flushing lateral pipe.

In an embodiment, the connecting bend pipe is integrally formed with the flushing vertical pipe.

In an embodiment, the inner diameter of the flushing lateral pipe is between 30 mm - 40 mm and the inner diameter of the flushing vertical pipe is between 55 mm - 80 mm.

In an embodiment, the connecting bend pipe includes a bend pipe vertical section and a bend pipe lateral section integrally connected to the bend pipe vertical section.

One end of the flushing lateral pipe is connected to the bend pipe lateral section and an upper end of the bend pipe vertical section is connected to a lower end of the flushing vertical pipe.

Along a direction from top to bottom, an inner diameter of the bend pipe vertical section gradually decreases.

In an embodiment, the connecting bend pipe is provided with a flow guiding plate at a corner, and the flow guiding plate is connected to the bend pipe vertical section and/or the bend pipe lateral section.

In an embodiment, the flow guiding plate is arranged coplanarly with an axis of the bend pipe lateral section and an axis of the bend pipe vertical section.

In an embodiment, one end of the flow guiding plate extends into the bend pipe lateral section, and the flow guiding plate is connected to the bend pipe vertical section and the bend pipe lateral section.

In an embodiment, one end of the flushing lateral pipe is inserted into the bend pipe lateral section.

The bend pipe lateral section is provided with a plurality of pipe wall convex ribs at intervals along a circumference direction for centrally positioning the bend pipe lateral section.

In an embodiment, a first sealing ring is assembled between a pipe wall of the bend pipe lateral section and a pipe wall of the flushing lateral pipe.

In an embodiment, an area of the bend pipe lateral section where the first sealing ring is mounted is provided with a circle of lateral section convex wall, an inner annular surface of the lateral section convex wall has a circle of positioning groove, and the first sealing ring is assembled in the positioning groove.

In an embodiment, the bend pipe vertical section and/or the bend pipe lateral section are connected to a positioning protrusion.

In an embodiment, the positioning protrusion includes a first positioning plate. The first positioning plate and the bend pipe lateral section are located on opposite sides of the bend pipe vertical section.

In an embodiment, the first positioning plate is connected to the bend pipe vertical section by means of a connecting plate, and the first positioning plate is perpendicular to an axis of the bend pipe lateral section.

In an embodiment, the positioning protrusion includes a second positioning plate connected to a bottom of the bend pipe lateral section, and the second positioning plate is perpendicular to an axis of the bend pipe lateral section.

In an embodiment, a reinforcement plate is connected between the second positioning plate and the bend pipe lateral section.

In an embodiment, the flushing vertical pipe has a plurality of vertical pipe recesses evenly arranged along a vertical direction, with a section of ready-to-cut pipe formed between any two of the adjacent vertical pipe recesses.

In an embodiment, an outer surface of each ready-to-cut pipe is provided with a cut marking element.

In an embodiment, an end of the flushing lateral pipe connected to the toilet is assembled with a second sealing ring, and the flushing lateral pipe is provided with a flange for stopping the second sealing ring.

A technical solution of the present disclosure also provides a toilet flushing system. The toilet flushing system includes a water tank, a toilet, and a flushing device according to any of the embodiments as described above.

An upper end of the flushing vertical pipe is connected to an outlet pipe of the water tank, and the flushing lateral pipe is connected to a water inlet of the toilet.

In an embodiment, the outlet pipe is inserted into the flushing vertical pipe, and a third sealing ring is provided between the outlet pipe and the flushing vertical pipe.

By adopting the above technical solutions, the present disclosure has the following beneficial effects.

In the flushing device and the toilet flushing system according to the present disclosure, the flushing device includes the flushing vertical pipe, the connecting bend pipe and the flushing lateral pipe connected in sequence. The upper end of the flushing vertical pipe is connected to the water tank, and one end of the flushing lateral pipe is connected to the water inlet of the toilet. The inner diameter of the flushing vertical pipe is larger than the inner diameter of the connecting bend pipe and larger than the inner diameter of the flushing lateral pipe. The flushing vertical pipe is the thickest, which can leave a certain space or cavity to collect air. When the water tank flushes, the flushing vertical pipe will not be filled with water, and the bubbles entrained in the water discharged from the water tank will be accumulated in a cavity of the flushing vertical pipe. This may effectively avoid or reduce the bubbles that rush down with the water flow and are accumulated in the bend of the connecting bend pipe and the flushing lateral pipe. This may reduce the influence of bubbles on the flushing speed, may improve the flushing performance of the flushing device and toilet flushing system, and may improve the flushing effect of the toilet.

The flushing device and toilet flushing system according to the present disclosure are provided with the flow guiding plate at the corner of the connecting bend pipe. This may adjust the form of the water at the bend from turbulence to laminar flow, may reduce the loss of potential energy of the water and the loss of the drainage flow rate, further may improve the flushing performance of the flushing device and the toilet flushing system, and may improve the flushing effect of the toilet.

### BRIEF DESCRIPTION OF THE FIGURES

With reference to the drawings, the contents disclosed by the present disclosure should be more easily understood. It should be understood that: these drawings are merely used for illustration and are not intended to limit the protection scope of the present disclosure. In the drawings:
FIG. 1 is a perspective view of a flushing device according to an embodiment of the present disclosure;
FIG. 2 is an exploded view of the flushing device according to an embodiment of the present disclosure;
FIG. 3 is a sectional view of the flushing device according to an embodiment of the present disclosure;
FIG. 4 is a perspective view of a flushing vertical pipe and a connecting bend pipe connected as a whole from a first view;
FIG. 5 is a perspective view of the flushing vertical pipe and the connecting bend pipe connected as a whole from a second view;
FIG. 6 is a semi-sectional view of the flushing vertical pipe and the connecting bend pipe;
FIG. 7 is an enlarged view of a bend pipe lateral section;
FIG. 8 is a perspective view of a toilet flushing system according to an embodiment of the present disclosure;
FIG. 9 is a perspective view of a water tank;
FIG. 10 is a sectional view of an outlet pipe of the water tank inserted into the flushing vertical pipe; and
FIG. 11 is a flow chart of a method for manufacturing a flushing device according to an embodiment of the present disclosure.

### DETAILED DESCRIPTION

The specific embodiments of the present disclosure are further described with reference to the drawings hereinafter. Same or equivalent parts are denoted by the same reference numerals. It should be noted that the terms, such as "front", "rear", "left", "right", "up" and "down" used in the present disclosure, refer to the directions in the drawings, and the terms, such as "inner" and "outer", refer to the directions towards or far away from geometric centers of specific parts respectively.

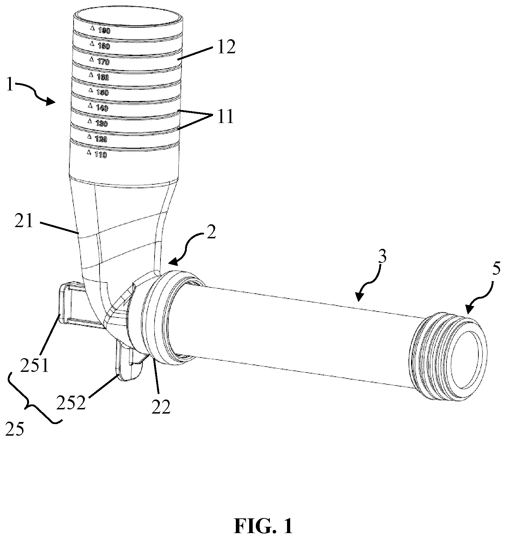

As shown in FIGS. 1, 3, and 8, a flushing device for connecting a toilet 7 to a water tank 6 according to an embodiment of the present disclosure comprises a flushing vertical pipe 1 configured to be connected to the water tank 6. The flushing device also comprises a flushing lateral pipe 3 configured to be connected to the toilet 7. The flushing device also comprises a connecting bend pipe 2 connected between a lower end of the flushing vertical pipe 1 and one end of the flushing lateral pipe 3.

An inner diameter of the flushing vertical pipe 1 is larger than an inner diameter of the connecting bend pipe 2 and larger than an inner diameter of the flushing lateral pipe 3.

The flushing device according to the present disclosure is configured to connect the water tank 6 to the toilet 7, and the water tank 6 may be hung on a wall or embedded in a wall.

The "vertical or vertical direction" used in this present disclosure refers to a substantially perpendicular arrangement or perpendicular direction, and the "lateral or lateral direction" used in this present disclosure refers to a substantially horizontal arrangement or horizontal direction.

The flushing device comprises the flushing vertical pipe 1, the connecting bend pipe 2, and the flushing lateral pipe 3 connected in sequence. An upper end of the flushing vertical pipe 1 is connected to an outlet pipe 61 of the water tank 6, and one end of the flushing lateral pipe 3 is connected to a water inlet of the toilet 7. The flushing vertical pipe 1, the connecting bend pipe 2, and the flushing lateral pipe 3 may be plastic pipes. The connecting bend pipe 2 may be separately connected to the flushing vertical pipe 1 and also may be formed integrally with the flushing vertical pipe 1. The connecting bend pipe 2 is a transition bend pipe, which may be a bend pipe having a curved transition surface. In an embodiment, a right-angle bend pipe can also be adopted.

An inner diameter of the flushing vertical pipe 1 is larger than an inner diameter of the connecting bend pipe 2, and the inner diameter of the flushing vertical pipe 1 is also larger than an inner diameter of the flushing lateral pipe 3. Generally, an average diameter of the connecting bend pipe 2 is also larger than the inner diameter of the flushing lateral pipe 3. The flushing vertical pipe 1 is the thickest, so that it can leave a certain space or cavity for collecting air. The flushing vertical pipe 1 is also thicker than the outlet pipe 61, so that when the water tank 6 flushes, the flushing vertical pipe 1 is not completely filled with water, and a cavity is formed in its upper portion. The bubbles entrained in the water discharged from the water tank 6 will be accumulated in the cavity of the flushing vertical pipe 1. This may effectively avoid or reduce the bubbles that rush down with the water flow and are accumulated in the bend of the connecting bend pipe 2 and the flushing lateral pipe 3. This may reduce the influence of bubbles on the flushing speed, may improve the flushing performance of the flushing device and toilet flushing system, and may improve the flushing effect of the toilet 7.

Before the water tank 6 is drained, the flushing device is filled with air. When the water tank 6 is drained, most of the air in the flushing device will be pushed into the toilet 7 by the water, and only a small portion of the air and the bubbles entrained by the water will be accumulated in the cavity of the flushing vertical pipe 1. After the water tank 6 has been drained, the flushing device is filled with air again.

In an embodiment, the connecting bend pipe 2 is integrally formed with the flushing vertical pipe 1, specifically by using one piece injection molding, with high structural strength and good sealing performance.

In an embodiment, the inner diameter of the flushing lateral pipe 3 is between 30 mm - 40 mm, and the inner diameter of the flushing vertical pipe 1 is between 55 mm - 80 mm, so that when the flushing lateral pipe 3 is filled with water, the flushing vertical pipe 1 will not be filled with water, and sufficient space or cavity can be left for air collection.

The average pipe diameter of the connecting bend pipe 2 may be selected between 40 mm - 60 mm.

In an embodiment, as shown in FIGS. 1-3, the connecting bend pipe 2 comprises a bend pipe vertical section 21 and a bend pipe lateral section 22 integrally connected to (e.g., integrally formed with) the bend pipe vertical section 21. One end of the flushing lateral pipe 3 is connected to the bend pipe lateral section 22, and an upper end of the bend pipe vertical section 21 is connected to a lower end of the flushing vertical pipe 1.

Along a direction from top to bottom, an inner diameter of the bend pipe vertical section 21 gradually decreases.

In this embodiment, the connecting bend pipe 2 comprises the bend pipe vertical section 21 and the bend pipe lateral section 22 as a whole. The bend pipe vertical section 21 has a tapered structure or a flared structure or a funnel structure, and the inner diameter of the bend pipe vertical section 21 progressively decreases in the direction from top to bottom.

The upper end of the flushing vertical pipe 21 is connected to the lower end of the flushing vertical pipe 1, and the water flowing from the lower end of the flushing vertical pipe 1 enters through the larger upper opening of the flushing vertical pipe 21, which serves to guide the waterflow. Because the pipe diameter of the bend pipe vertical section 21 gradually decreases, the water flowing downwardly may quickly fill the bend pipe vertical section 21 thus may prevent the air or bubbles downstream from scurrying into the flushing vertical pipe 1. After the water tank 6 starts to drain, all or most the air in the connecting bend pipe 2 and the flushing lateral pipe 3 may be pushed into the toilet 7. During the process of the water rushing from the flushing vertical pipe 1 to the bend pipe vertical section 21, most of the air from the flushing vertical pipe 1 is pushed into the bend pipe vertical section 21 and then is discharged with the waterflow. When the bend pipe vertical section 21 is filled with water, the bubbles accumulated in the cavity of the flushing vertical pipe 1 may also be blocked from traveling downstream. This may effectively avoid any impact on the flushing speed of the flushing lateral pipe 3.

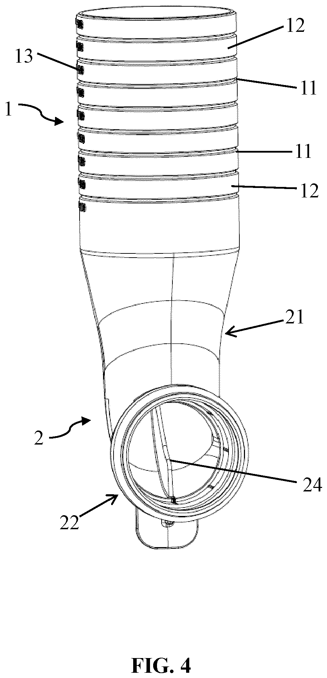

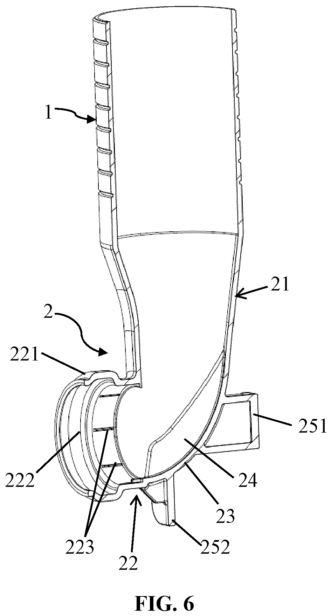

In an embodiment, as shown in FIGS. 4-6, the connecting bend pipe 2 is provided with a flow guiding plate 24 at a corner, and the flow guiding plate 24 is connected to the bend pipe vertical section 21 and/or the bend pipe lateral section 22.

The flow guiding plate 24 is connected between the lower portion of the bend pipe vertical section 21 and the bend pipe lateral section 22, and the flow guiding plate 24 is substantially located at the corner of the connecting bend pipe 2. The flow guiding plate 24 is located at the bottom side of the corner and configured to guide the waterflow and convert the water at the corner from turbulent to laminar flow. Thus. the potential energy loss of the water and the loss of the drainage flow rate may be reduced, and the flushing effect of the toilet may be improved.

In an embodiment, as shown in FIGS. 1-3, the back side of the lower portion of the bend pipe vertical section 21 has a transition bend plate 23, and the flow guiding plate 24 is connected to the transition bend plate 23.

The "back side" used in the present disclosure refers to the side of the bend pipe vertical section 21 that faces away from the toilet 7, the bend pipe lateral section 22, or the flushing lateral pipe 3.

The back side of the lower portion of the bend pipe vertical section 21 is provided with the transition bend plate 23 gradually bent towards the side of the bend pipe lateral section 22 and is substantially in a curved shape to avoid right-angle turns. The flow guiding plate 24 is integrally connected to the middle position of the inner surface of the transition bend plate 23.

In an embodiment, the flow guiding plate 24 is arranged coplanarly with an axis of the bend pipe lateral section 22 and an axis of the bend pipe vertical section 21 (e.g., the flow guiding plate 24 is disposed on a plane formed by the axis of the bend pipe lateral section 22 and the axis of the bend pipe vertical section 21). In other words, the flow guiding plate 24 is disposed in the middle of the bottom of the turning or corner and thus splits the water passing through the transition bend plate 23 into two water streams. This may reduce the rebound force of the water, may reduce the possibility of turbulence formation, and may assist in converting the water flow into laminar flow.

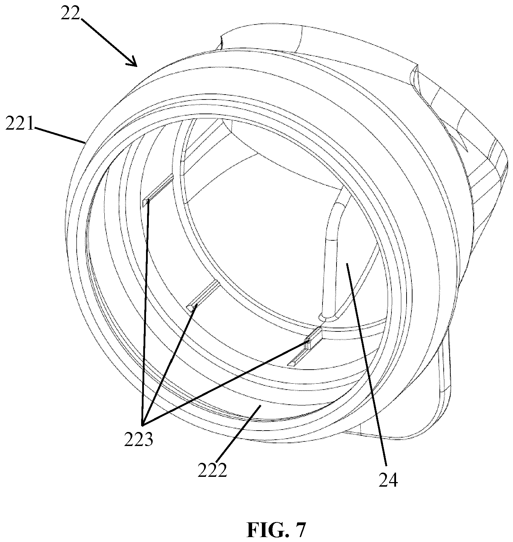

In an embodiment, as shown in FIG. 7, one end of the flow guiding plate 24 extends into the bend pipe lateral section 22, and the flow guiding plate 24 is connected to the bend pipe vertical section 21 and the bend pipe lateral section 22. This may provide a stable connection and may directly help to guide the waterflow into the bend pipe lateral section 22 for smooth flushing into the flushing pipe lateral 3.

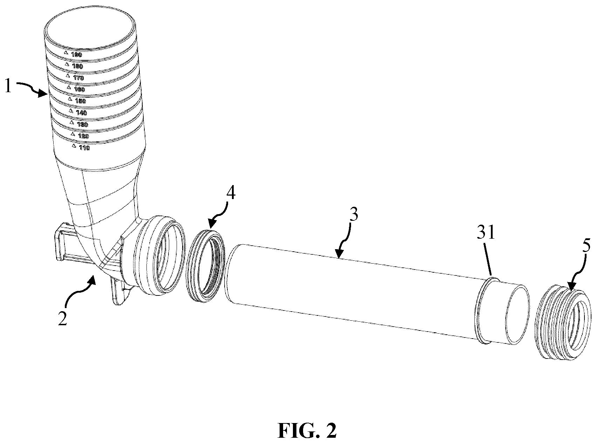

In an embodiment, as shown in FIGS. 2, 3, 6, and 7, one end of the flushing lateral pipe 3 is inserted into the bend pipe lateral section 22, and the bend pipe lateral section 22 is provided with a plurality of pipe wall convex ribs 223 at intervals (e.g., the plurality of pipe wall convex ribs 223 are spaced apart from each other) along a circumference direction. The plurality of pipe wall convex ribs 223 is configured to centrally position the bend pipe lateral section 22.

In this embodiment, the plurality of pipe wall convex ribs 223 are disposed on the inner surface of the bend pipe lateral section 22 is configured to squeeze or press the pipe wall of the flushing lateral pipe 3 so as to centrally position the bend pipe lateral section 22 and enhance the assembly stability of the flushing lateral pipe 3 with the bend pipe lateral section 22.

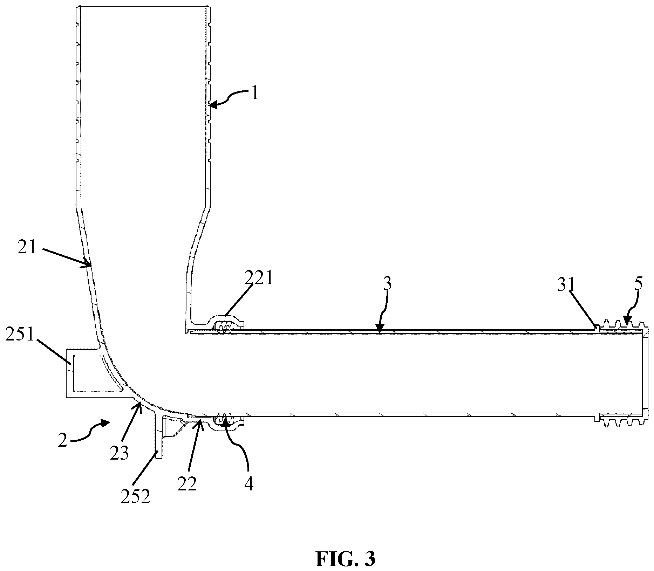

In an embodiment, as shown in FIGS. 2 and 3, a first sealing ring 4 is assembled between a pipe wall of the bend pipe lateral section 22 and a pipe wall of the flushing lateral pipe 3 to enhance the sealing performance between the flushing lateral pipe 3 and the bend pipe lateral section 22.

In an embodiment, as shown in FIGS. 3 and 5-7, an area of the bend pipe lateral section 22 where the first sealing ring 4 is mounted is provided with a circle of lateral section convex wall 221, an inner annular surface of the lateral section convex wall 221 has a circle of positioning groove 222, and the first sealing ring 4 is assembled in the positioning groove 222.

In this embodiment, the end portion of the flushing lateral pipe 3 is provided with a circle of lateral section convex wall 221 projecting outwardly along a radial direction to increase the thickness of the pipe wall at this location, so as to provide the positioning groove 222 on the inner surface and position the first sealing ring 4 by means of the positioning groove 222, so as to enhance the assembly stability of the first sealing ring 4.

In an embodiment, as shown in FIG. 1, the bend pipe vertical section 21 and/or the bend pipe lateral section 22 are connected to a positioning protrusion 25.

In this embodiment, the connecting bend pipe 2 is provided with the positioning protrusion 25 for positioning the connecting bend pipe 2 during mounting. Specifically, the positioning protrusion 25 may be connected to the bend pipe vertical section 21 and/or the bend pipe lateral section 22.

The positioning protrusion 25 may be a positioning structure, such as a positioning plate, a positioning boss, or the like.

The positioning protrusion 25 may be integrally injection-molded with the connecting bend pipe 2.

In an embodiment, as shown in FIGS. 1, 3, 5, and 6, the positioning protrusion 25 comprises a first positioning plate 251, the first positioning plate 251 and the bend pipe lateral section 22 are located on opposite sides of the bend pipe vertical section 21.

In this embodiment, the positioning protrusion 25 comprises the first positioning plate 251, which is connected to the back side of the bend pipe vertical section 21 and configured to be mounted to the wall body or wall surface.

In an embodiment, as shown in FIGS. 1, 3, 5, and 6, the first positioning plate 251 is connected to the bend pipe vertical section 21 by means of a connecting plate 253, and the first positioning plate 251 is perpendicular to an axis of the bend pipe lateral section 22.

In this embodiment, the first positioning plate 251 is perpendicular to an axis of the bend pipe lateral section 22 so as to be parallel to the wall body or wall surface. This may facilitate the positioning and mounting. The first positioning plate 251 is connected to the bend pipe vertical section 21 by means of a connecting plate 253, both of which may be injection-molded integrally with the bend pipe vertical section 21.

In an embodiment, as shown in FIGS. 1, 3, 5, and 6, the positioning protrusion 25 comprises a second positioning plate 252 connected to a bottom of the bend pipe lateral section 22, and the second positioning plate 252 is perpendicular to an axis of the bend pipe lateral section 22.

In this embodiment, the positioning protrusion 25 comprises the second positioning plate 252 that is connected to the bottom of the bend pipe lateral section 22 and is perpendicular to the axis of the bend pipe lateral section 22 so as to be connected to a wall body or a mounting structure below the bend pipe lateral section 22. The second positioning plate 252 may be injection-molded integrally with the bend pipe lateral section 22.

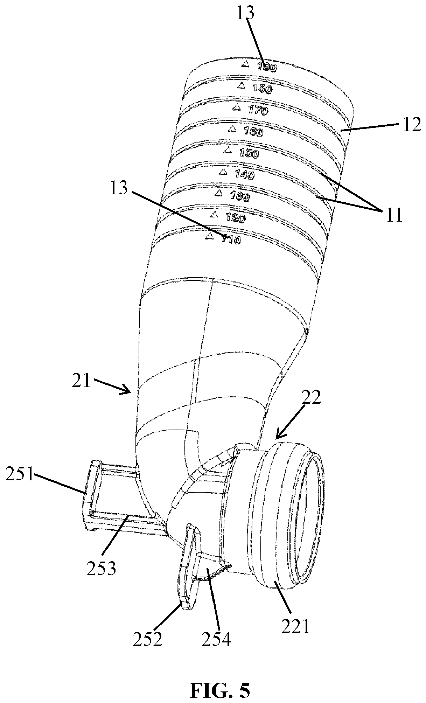

In one embodiment, as shown in FIG. 5, a reinforcement plate 254 is connected between the second positioning plate 252 and the bend pipe lateral section 22 to enhance the connection stability between the second positioning plate 252 and the bend pipe lateral section 22. The reinforcement plate 254 may be integrally injection-molded with the second positioning plate 252 and the bend pipe lateral section 22.

In an embodiment, as shown in FIGS. 1, 4, and 5, the flushing vertical pipe 1 has a plurality of vertical pipe recesses 11 evenly arranged along a vertical direction, with a section of ready-to-cut pipe 12 formed between any two of the adjacent vertical pipe recesses 11.

In this embodiment, the flushing vertical pipe 1 is provided with the plurality of vertical pipe recesses 11. The distance between any two adjacent vertical pipe recesses 11 is equal, and the spacing can be selected as 10 mm. Thus, the flushing vertical pipe 1 is divided into a plurality of ready-to-cut pipes 12. The user can cut or slice the ready-to-cut pipe 12 according to the need to regulate the height of the flushing vertical pipe 1, so as to satisfy the need of the mounting working conditions.

In an embodiment, as shown in FIGS. 4 and 5, an outer surface of the ready-to-cut pipe 12 is provided with a cut marking element 13, the cut marking element 13 may be a specific dimensional parameter, a shape symbol, or the like, and the dimensional parameter is raised on a protrusion on the outer surface of the ready-to-cut pipe 12. The user may understand the distance between the ready-to-cut pipe 12 and the axis of the flushing lateral pipe 3 according to the dimensional parameter.

As shown in FIG. 5, the ready-to-cut pipe 12 is provided with 110 mm, 120 mm, 130 mm, 140 mm, or the like in an order from bottom to top. The shape symbols may be a triangle symbol, a quadrilateral symbol or the like.

In an embodiment, as shown in FIGS. 2 and 3, an end of the flushing lateral pipe 3 connected to the toilet 7 is assembled with a second sealing ring 5, and the flushing lateral pipe 3 is provided with a flange 31 configured to stop the second sealing ring 5 and configured to be sealed with the water inlet of the toilet 7. Thus, the sealing performance may be enhanced. The flange 31 is provided on the flushing lateral pipe 3, which is desirably provided in an annular shape. The flange 31 is located at one end of the second sealing ring 5 and directed toward the bend pipe vertical pipe 21 for stopping the second sealing ring 5 from sliding during assembly.

The sealing ring used in the present disclosure may be a rubber sealing ring.

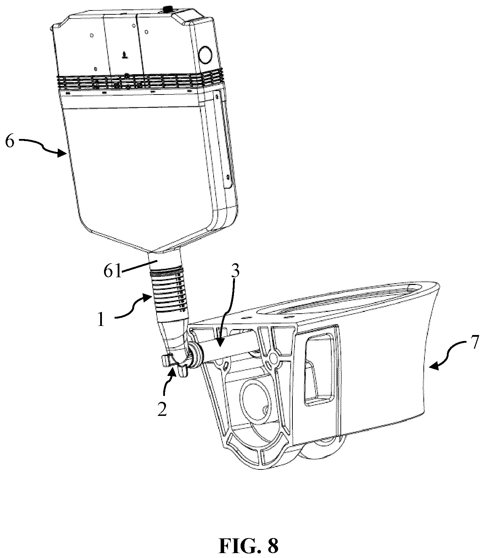

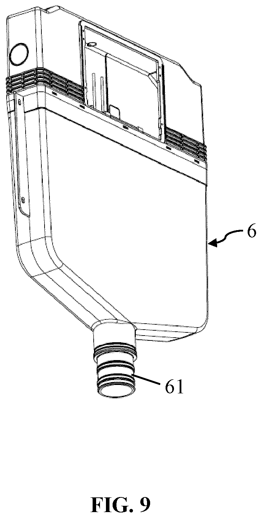

As shown in FIGS. 8 and 9, a toilet flushing system according to an embodiment of the present disclosure comprises a water tank 6, a toilet 7, and a flushing device as described in any of the preceding embodiments.

An upper end of the flushing vertical pipe 1 is connected to an outlet pipe 61 of the water tank 6, and the flushing lateral pipe 3 is connected to a water inlet of the toilet 7.

The toilet flushing system according to a present disclosure comprises the water tank 6, the toilet 7, and the flushing device.

For the structure, the construction and working principle of the flushing device are the same as the above-described flushing device. Thus, the description of the flushing device has been omitted herein.

The bottom of the water tank 6 has the outlet pipe 61 and the rear portion of the toilet 7 has the water inlet.

An upper end of the flushing vertical pipe 1 is connected to the outlet pipe 61 in a sealed manner, and the flushing lateral pipe 3 is connected to the water inlet of the toilet 7 in a sealed manner.

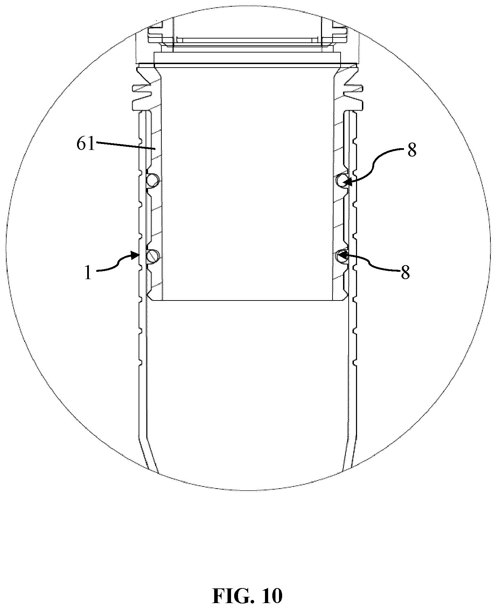

In an embodiment, as shown in FIG. 10, the outlet pipe 61 is inserted into the flushing vertical pipe 1, and a third sealing ring 8 is provided between the outlet pipe 61 and the flushing vertical pipe 1.

In this embodiment, the outlet pipe 61 is slightly thinner than the flushing vertical pipe 1, which is inserted into the flushing vertical pipe 1 and sealed by means of the third sealing ring 8. This may ensure that the flushing vertical pipe 1 will not be completely filled when draining and may enhance the sealing performance between the outlet pipe 61 and the flushing vertical pipe 1.

In an embodiment, the toilet 7 in the above embodiments may include a base (e.g., a pedestal, a bowl, etc.) and a tank (e.g., the water tank 6). The base is configured to be attached to another object such as a drainpipe, floor, or another suitable object. The base includes a bowl, a sump (e.g., a receptacle) disposed below the bowl, and a trapway fluidly connecting the bowl to a drainpipe or sewage line. The tank may be supported by the base, such as an upper surface of a rim. The tank may be integrally formed with the base as a single unitary body. In other embodiments, the tank may be formed separately from the base and coupled (e.g., attached, secured, fastened, connected, etc.) to the base. The toilet may further include a tank lid covering an opening and inner cavity in the tank. The toilet may include a seat assembly including a seat and a seat cover rotatably coupled to the base. The toilet arrangement may further include a hinge assembly.

In another embodiment, the toilet arrangement may be a tankless toilet. The toilet arrangement includes a base and a seat assembly coupled to the base. The base includes a bowl, a sump disposed below the bowl, and a trapway fluidly connecting the bowl to a drainpipe or sewage line. The toilet arrangement includes a waterline that supplies the toilet with water. The toilet may further include a seat assembly including a seat and a seat cover rotatably coupled to the base. The toilets described above are provided herein as non-limiting examples of toilets that may be configured to utilize aspects of the present disclosure.

In some examples, a bidet may be included in a seat or pedestal of a toilet. In other examples, the bidet may be manufactured separately from and attached or coupled to a seat or pedestal of a toilet. The bidet includes a housing. The housing is configured to receive a flow of water through a housing inlet and dispense the flow of water from a housing outlet. The housing inlet and housing outlet may be located on opposite ends of the housing from one another, such that water may flow through the housing from the housing inlet to the housing outlet. In some examples, the housing further includes a chamber. As the housing receives the flow of water, the chamber may fill with water and provide a flow of water between the housing inlet and the housing outlet. The chamber may be configured to contain the flow of water and direct the flow of water from the housing inlet to the housing outlet. After the chamber has filled with water, the flow of water may travel along a substantially linear path between the housing inlet and the housing outlet. In some examples, one or more walls within the housing may be included to help direct a flow of water between the housing inlet and the housing outlet. The bidet may further include a housing inlet conduit configured to direct a flow of water to the housing inlet. The housing inlet conduit may be coupled to a water supply such as tank or waterline. The housing may further include a gear assembly or a portion of the gear assembly. The bidet may be a front wash bidet for female users and may use, generate, and/perform the functions related to nanobubbles, ozonated water, eWater, hydrogen peroxide generation, pH Control, template assisted crystallization, application of polyphosphates, filtration (ultrafiltration, nanofiltration, microfiltration, carbon/GAC), fluidic oscillating sprays, and adding other consumables in the water stream. For nanobubbles, air, ozone, oxygen, hydrogen, and carbon dioxide may be used.

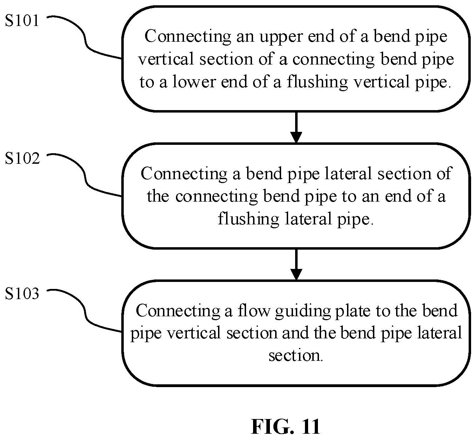

An embodiment of the present disclosure further provides a method for manufacturing a flushing device. FIG. 11 is a flow chart of a method for manufacturing a flushing device according to an embodiment of the present disclosure. The flushing device in the method may be the flushing device according to any of the embodiments, and the descriptions regarding the flushing device are incorporated herein. The flushing device is configured to perform an operation, function, or the like as described in the present disclosure.

At act S101, the upper end of the bend pipe vertical section 21 of the connecting bend pipe 2 is connected to the lower end of the flushing vertical pipe 1.

Specifically, as described above, the connecting bend pipe 2 comprises a bend pipe vertical section 21 and a bend pipe lateral section 22 integrally connected to (e.g., integrally formed with) the bend pipe vertical section 21. The upper end of the bend pipe vertical section 21 is connected to the lower end of the flushing vertical pipe 1. Along a direction from top to bottom, an inner diameter of the bend pipe vertical section 21 gradually decreases. The bend pipe vertical section 21 has a tapered structure or a flared structure or a funnel structure, and the inner diameter of the bend pipe vertical section 21 progressively decreases in the direction from top to bottom. The water flowing from the lower end of the flushing vertical pipe 1 enters through the larger upper opening of the flushing vertical pipe 21, which serves to guide the waterflow. Because the pipe diameter of the bend pipe vertical section 21 gradually decreases, the water flowing downwardly may quickly fill the bend pipe vertical section 21 thus may prevent the air or bubbles downstream from scurrying into the flushing vertical pipe 1.

During the process of the water rushing from the flushing vertical pipe 1 to the bend pipe vertical section 21, most of the air from the flushing vertical pipe 1 is pushed into the bend pipe vertical section 21 and then is discharged with the waterflow. When the bend pipe vertical section 21 is filled with water, the bubbles accumulated in the cavity of the flushing vertical pipe 1 may also be blocked from traveling downstream. This may effectively avoid any impact on the flushing speed of the flushing lateral pipe 3.

At act S 102, the bend pipe lateral section 22 of the connecting bend pipe 2 is connected to the end of the flushing lateral pipe 3.

Specifically, as described above, one end of the flushing lateral pipe 3 is inserted into the bend pipe lateral section 22, and the bend pipe lateral section 22 is provided with a plurality of pipe wall convex ribs 223 at intervals (e.g., the plurality of pipe wall convex ribs 223 are spaced apart from each other) along a circumference direction. The plurality of pipe wall convex ribs 223 is configured to centrally position the bend pipe lateral section 22.

In this embodiment, the plurality of pipe wall convex ribs 223 are disposed on the inner surface of the bend pipe lateral section 22 is configured to squeeze or press the pipe wall of the flushing lateral pipe 3 so as to centrally position the bend pipe lateral section 22 and enhance the assembly stability of the flushing lateral pipe 3 with the bend pipe lateral section 22.

In an embodiment, as shown in FIGS. 2 and 3, a first sealing ring 4 is assembled between a pipe wall of the bend pipe lateral section 22 and a pipe wall of the flushing lateral pipe 3 to enhance the sealing performance between the flushing lateral pipe 3 and the bend pipe lateral section 22.

At act S 103, the flow guiding plate 24 is connected to the bend pipe vertical section 21 and the bend pipe lateral section 22.

Specifically, as described above, the connecting bend pipe 2 is provided with a flow guiding plate 24 at a corner, and the flow guiding plate 24 is connected to the bend pipe vertical section 21 and/or the bend pipe lateral section 22.

The flow guiding plate 24 is connected between the lower portion of the bend pipe vertical section 21 and the bend pipe lateral section 22, and the flow guiding plate 24 is substantially located at the corner of the connecting bend pipe 2. The flow guiding plate 24 is located at the bottom side of the corner and configured to guide the waterflow and convert the water at the corner from turbulent to laminar flow. Thus. the potential energy loss of the water and the loss of the drainage flow rate may be reduced, and the flushing effect of the toilet may be improved.

In an embodiment, the flow guiding plate 24 is arranged coplanarly with an axis of the bend pipe lateral section 22 and an axis of the bend pipe vertical section 21 (e.g., the flow guiding plate 24 is disposed on a plane formed by the axis of the bend pipe lateral section 22 and the axis of the bend pipe vertical section 21).

In an embodiment, as shown in FIG. 7, one end of the flow guiding plate 24 extends into the bend pipe lateral section 22, and the flow guiding plate 24 is connected to the bend pipe vertical section 21 and the bend pipe lateral section 22. This may provide a stable connection and may directly help to guide the waterflow into the bend pipe lateral section 22 for smooth flushing into the flushing pipe lateral 3.

The above technical solutions may be combined as required to achieve the best technical effect.

The above are merely the principle and the embodiments of the present disclosure. It should be pointed out that, for those having ordinary skill in the art, other variations may be made based on the principle of the present disclosure, which should also be regarded as falling in the protection scope of the present disclosure.

An aspect provides a flushing plumbing for connecting a toilet with a water tank , comprising a flushing vertical pipe for being connected with the water tank, a flushing lateral pipe for being connected with the toilet, and a connecting bend pipe connected between a lower end of the flushing vertical pipe and one end of the flushing lateral pipe ;
wherein, an inner diameter of the flushing vertical pipe is larger than an inner diameter of the connecting bend pipe and larger than an inner diameter of the flushing lateral pipe .

The connecting bend pipe may be integrally formed with the flushing vertical pipe.

The inner diameter of the flushing lateral pipe may be between 30 mm - 40 mm. The inner diameter of the flushing vertical pipe may be between 55 mm - 80 mm.

In an example, the connecting bend pipe comprises a bend pipe vertical section and a bend pipe lateral section integrally connected with the bend pipe vertical section;
one end of the flushing lateral pipe is connected with the bend pipe lateral section and an upper end of the bend pipe vertical section is connected with a lower end of the flushing vertical pipe ;
wherein, along a direction from top to bottom, an inner diameter of the bend pipe vertical section gradually decreases.

The connecting bend pipe may be provided with a flow guiding plate at a corner. The flow guiding plate may be connected with the bend pipe vertical section and/or the bend pipe lateral section.

The flow guiding plate may be arranged coplanarly with an axis of the bend pipe lateral section and an axis of the bend pipe vertical section.

One end of the flow guiding plate may extend into the bend pipe lateral section. The flow guiding plate may be connected with the bend pipe vertical section and the bend pipe lateral section.

In an example, one end of the flushing lateral pipe is inserted into the bend pipe lateral section; and
the bend pipe lateral section is provided with a plurality of pipe wall convex ribs at intervals along a circumference direction for centrally positioning the bend pipe lateral section.

A first sealing ring may be assembled between a pipe wall of the bend pipe lateral section and a pipe wall of the flushing lateral pipe.

In an example, an area of the bend pipe lateral section where the first sealing ring is mounted is provided with a circle of lateral section convex wall, an inner annular surface of the lateral section convex wall has a circle of positioning groove, and the first sealing ring is assembled in the positioning groove.

The bend pipe vertical section and/or the bend pipe lateral section may be connected to a positioning protrusion.

The positioning protrusion may comprise a first positioning plate. The first positioning plate and the bend pipe lateral section may be located on opposite sides of the bend pipe vertical section.

The first positioning plate may be connected with the bend pipe vertical section by means of a connecting plate . The first positioning plate may be perpendicular to an axis of the bend pipe lateral section.

The positioning protrusion may comprise a second positioning plate connected to a bottom of the bend pipe lateral section. The second positioning plate may be perpendicular to an axis of the bend pipe lateral section.

A reinforcement plate may be connected between the second positioning plate and the bend pipe lateral section.

The flushing vertical pipe may have a plurality of vertical pipe recesses evenly arranged along a vertical direction, with a section of ready-to-cut pipe formed between any two of the adjacent vertical pipe recesses.

An outer surface of each ready-to-cut pipe may be provided with a cut marking element.

An end of the flushing lateral pipe connected to the toilet may be assembled with a second sealing ring. The flushing lateral pipe may be provided with a flange for stopping the second sealing ring .

An aspect provides a toilet flushing system, comprising a water tank, a toilet and a flushing plumbing according to the preceding aspect;
an upper end of the flushing vertical pipe is connected with an outlet pipe of the water tank, and the flushing lateral pipe is connected with a water inlet of the toilet.

The outlet pipe may be inserted into the flushing vertical pipe. A third sealing ring may be provided between the outlet pipe and the flushing vertical pipe.

## Claims

1. A flushing device configured to connect a toilet to a water tank, the flushing device comprising:
a flushing vertical pipe configured to be connected to the water tank;
a flushing lateral pipe configured to be connected to the toilet; and
a connecting bend pipe configured to be connected between a lower end of the flushing vertical pipe and a first end of the flushing lateral pipe,
wherein an inner diameter of the flushing vertical pipe is larger than an inner diameter of the connecting bend pipe and larger than an inner diameter of the flushing lateral pipe.

2. The flushing device according to claim 1, wherein the connecting bend pipe comprises:
a bend pipe vertical section comprising an upper end configured to be connected to the lower end of the flushing vertical pipe; and
a bend pipe lateral section integrally formed with the bend pipe vertical section and configured to be connected to the first end of the flushing lateral pipe,
wherein, along a top-to-bottom direction of the bend pipe vertical section, an inner diameter of the bend pipe vertical section decreases.

3. The flushing device according to claim 2, wherein the connecting bend pipe comprises a flow guiding plate disposed at a corner of the connecting bend pipe, and
wherein the flow guiding plate is configured to be connected to the bend pipe vertical section or the bend pipe lateral section.

4. The flushing device according to claim 3, wherein the flow guiding plate is disposed on a plane formed by an axis of the bend pipe lateral section and an axis of the bend pipe vertical section and/or wherein the flow guiding plate is configured to extend into the bend pipe lateral section and be connected to the bend pipe vertical section and the bend pipe lateral section.

5. The flushing device according to claim 2, claim 3 or claim 4, wherein the first end of the flushing lateral pipe is configured to be inserted into the bend pipe lateral section, and
wherein the bend pipe lateral section comprises a plurality of pipe wall convex ribs spaced apart from each other along a circumference direction and configured to centrally position the bend pipe lateral section.

6. The flushing device according to any one of claims 2 to 5, further comprising:
a first sealing ring disposed between a pipe wall of the bend pipe lateral section and a pipe wall of the flushing lateral pipe.

7. The flushing device according to claim 6, further comprising:
a lateral section convex wall disposed on an area of the bend pipe lateral section where the first sealing ring is mounted,
wherein a positioning groove is disposed on an inner annular surface of the lateral section convex wall, and
wherein the first sealing ring is disposed in the positioning groove.

8. The flushing device according to any one of claims 2 to 7, wherein the bend pipe vertical section or the bend pipe lateral section is configured to be connected to a positioning protrusion.

9. The flushing device according to claim 8, wherein the positioning protrusion comprises a first positioning plate, and
wherein the first positioning plate and the bend pipe lateral section are disposed on opposite sides of the bend pipe vertical section,
optionally wherein the first positioning plate is configured to be connected to the bend pipe vertical section via a connecting plate, and wherein the first positioning plate is perpendicular to an axis of the bend pipe lateral section.

10. The flushing device according to claim 8 or claim 9, wherein the positioning protrusion comprises a second positioning plate configured to be connected to a bottom of the bend pipe lateral section, and
wherein the second positioning plate is perpendicular to an axis of the bend pipe lateral section,
optionally wherein the positioning protrusion comprises a reinforcement plate configured to be connected between the second positioning plate and the bend pipe lateral section.

11. The flushing device according to any one of claims 1 to 10, wherein the flushing vertical pipe comprises a plurality of vertical pipe recesses evenly distributed along a vertical direction of the flushing vertical pipe, and
wherein a ready-to-cut pipe is formed between any two of adjacent vertical pipe recesses,
optionally further comprising a cut marking element disposed on an outer surface of each ready-to-cut pipe.

12. The flushing device according to any one of claims 1 to 11, wherein a second end of the flushing lateral pipe is configured to be connected to the toilet,
wherein a second sealing ring is disposed on the second end of the flushing lateral pipe, and
wherein the flushing lateral pipe comprises a flange configured to stop the second sealing ring.

13. A toilet flushing system, comprising:
a water tank;
a toilet; and
a flushing device configured to connect the toilet to the water tank, the flushing device comprising:
a flushing vertical pipe configured to be connected to the water tank;
a flushing lateral pipe configured to be connected to the toilet; and
a connecting bend pipe configured to be connected between a lower end of the flushing vertical pipe and a first end of the flushing lateral pipe;
wherein an inner diameter of the flushing vertical pipe is larger than an inner diameter of the connecting bend pipe and larger than an inner diameter of the flushing lateral pipe,
wherein an upper end of the flushing vertical pipe is configured to be connected to an outlet pipe of the water tank, and
wherein the flushing lateral pipe is configured to be connected to a water inlet of the toilet,
optionally wherein the outlet pipe is configured to be inserted into the flushing vertical pipe, and wherein a third sealing ring is disposed between the outlet pipe and the flushing vertical pipe.

14. A method for manufacturing a flushing device, the method comprising:
connecting an upper end of a bend pipe vertical section of a connecting bend pipe to a lower end of a flushing vertical pipe;
connecting a bend pipe lateral section of the connecting bend pipe to an end of a flushing lateral pipe; and
connecting a flow guiding plate to the bend pipe vertical section and the bend pipe lateral section,
wherein the flow guiding plate is disposed on a plane formed by an axis of the bend pipe lateral section and an axis of the bend pipe vertical section.

15. The method according to claim 14, further comprising:
connecting a positioning protrusion to the bend pipe vertical section and the bend pipe lateral section,
wherein connecting the positioning protrusion to the bend pipe vertical section or the bend pipe lateral section comprises:
connecting a first positioning plate of the positioning protrusion to the bend pipe vertical section via a connecting plate;
connecting a second positioning plate of the positioning protrusion to a bottom of the bend pipe lateral section; and
connecting a reinforcement plate of the positioning protrusion between the second positioning plate and the bend pipe lateral section,
wherein the first positioning plate is perpendicular to the axis of the bend pipe lateral section, and
wherein the second positioning plate is perpendicular to the axis of the bend pipe lateral section.
